# EUROPÄISCHE PATENTSCHRIFT

(11) **EP 4 067 056 B1**
(45) Veröffentlichungstag und Bekanntmachung des Hinweises auf die Patenterteilung: **21.02.2024**
(21) Anmeldenummer: 21212201.4
(22) Anmeldetag: 03.12.2021
(51) Int. Cl.: B29D 30/08, B29D 30/52

(54) **REIFENROHLING, FAHRZEUGREIFEN SOWIE VERFAHREN ZUR HERSTELLUNG EINES FAHRZEUGREIFENS**
TYRE BLANK, VEHICLE TYRE AND METHOD FOR MANUFACTURING A VEHICLE TYRE
ÉBAUCHE DE BANDAGE DE ROUE, PNEU DE VÉHICULE, AINSI QUE PROCÉDÉ DE FABRICATION D'UN PNEU DE VÉHICULE

(30) Priorität: 31.03.2021 DE 102021203261
(43) Veröffentlichungstag der Anmeldung: 05.10.2022
(73) Patentinhaber: Continental Reifen Deutschland GmbH, 30165 Hannover (DE)
(72) Erfinder: Lhuillier, Emmanuel, 30165 Hannover (DE); Strübel, Christian, 30165 Hannover (DE)
(74) Vertreter: Continental Corporation

(56) Entgegenhaltungen:
- DE-A1-102004 036 517
- DE-A1-102017 209 911
- JP-A- H1 160 810

## Beschreibung

Die Erfindung betrifft einen unvulkanisierten Reifenrohling, welcher einen Laufstreifen, Seitenwände, eine Reifenwulst mit einem Reifenkern sowie einem Kernreiter, eine Karkasse und einen Reifengürtel aufweist, wobei der Laufstreifen ein Laufstreifenoberteil (cap) und ein in radialer Richtung flächig darunterliegendes Laufstreifenunterteil (base) aufweist. Die Erfindung betrifft weiterhin einen Fahrzeugreifen sowie ein Verfahren zur Herstellung des Fahrzeugreifens.

Ein Laufstreifen eines Fahrzeugreifens wird üblicherweise aus einer extrudierten oder kalandrierten Materialbahn, welche aus einer Kautschukmischung gefertigt ist, hergestellt und z.B. als Halbzeug zum Aufbau des Reifenrohlings bereitgestellt. Aus dem Stand der Technik sind Reifenrohlinge mit einem zweischichtigen Aufbau des Laufstreifens bekannt, wobei dieser ein radial inneres Laufstreifenunterteil (auch base genannt) aus einem ersten Material und ein radial äußeres Laufstreifenoberteil (auch cap genannt) aus einem zweiten Material aufweist.

Das Laufstreifenoberteil ist dafür vorgesehen im fertiggestellten Fahrzeugreifen mit der Fahrbahnoberfläche in Kontakt zu stehen, weshalb die Materialeigenschaften des Laufstreifenoberteils derart gewählt sind, dass beispielsweise eine gute Traktion auch auf nassen Oberflächen bei stabilen mechanischen Eigenschaften, wie Abrieb und Beständigkeit, gewährleistet ist. Die normalerweise viskoelastische Gummimischung des Laufstreifenoberteils wird daher entsprechend auf die Abriebfestigkeit und die Fahrstabilität eingestellt.

Das Laufstreifenunterteil hingegen ist explizit nicht dafür vorgesehen mit der Fahrbahnoberfläche in Kontakt zu stehen, weshalb die Materialeigenschaften des Laufstreifenunterteils derart gewählt sind, dass im fertiggestellten Fahrzeugreifen beispielsweise eine gute Wärmeableitung und/oder eine optimale Stoßübertragung auf darunterliegende Schichten innerhalb des fertiggestellten Fahrzeugreifens möglich ist. Weiterhin wird durch eine geeignete Auswahl der normalerweise ebenfalls viskoelastischen Gummimischung des Laufstreifenunterteils ein Rollwiderstand des fertiggestellten Fahrzeugreifens beeinflusst. Der Rollwiderstand ist dabei abhängig von Energieverlusten bzw. Hystereseverlusten, die aufgrund einer Deformation des Materials des Laufstreifens auftreten.

Die einzelnen genannten Eigenschaften, Abriebfestigkeit, Fahrstabilität, Wärmeableitung, Stoßübertragung, Rollwiderstand, etc., werden also allesamt durch die Materialauswahl in den einzelnen Schichten beeinflusst, wobei sich eine Wechselbeziehung zwischen den einzelnen Eigenschaften ergibt. Daher sind geeignete Materialien in den entsprechenden Schichten zu wählen, um die Eigenschaften für den gesamten Fahrzeugreifen zu optimieren. So wird beispielsweise das Laufstreifenoberteil mit dem zweiten Material eher auf Abriebfestigkeit und Fahrstabilität ausgelegt sein, was gleichzeitig eine Erhöhung des Rollwiderstandes zur Folge hat, da in dem Laufstreifenoberteil höher Energieverluste beim Deformieren des Fahrzeugreifens während der Fahrt auftreten. Gleichzeitig kann jedoch durch das Vorsehen des Laufstreifenunterteils, das nicht auf mechanische Eigenschaften wie die Abriebfestigkeit auszulegen ist, eine Verringerung des Rollwiderstandes erreicht werden, wenn ein entsprechendes viskoelastisches Material mit geringem Energieverlust bzw. Hystereseverlust gewählt wird.

Herkömmlicherweise ist der Laufstreifen auf dem Reifenrohling, d. h. im unvulkanisierten, ungehärteten Zustand, derartig aufgebaut, dass eine radiale Unterteil-Dicke des Laufstreifenunterteils entlang einer axialen Richtung und auch entlang einer Umfangsrichtung des Fahrzeugreifens konstant ist. Dies vereinfacht im Stand der Technik den Herstellungsprozess des Laufstreifens. Durch die stattfindenden Prozesse während des anschließenden Vulkanisierens des Reifenrohlings, insbesondere durch Fließprozesse im aufgeheizten Laufstreifenmaterial, kann sich die Unterteil-Dicke des Laufstreifenunterteils im fertiggestellten Fahrzeugreifen in willkürlicher Weise und in einem geringen Ausmaß verändern. Dadurch kann jedoch keine kontrollierbare und reproduzierbare Einstellung der o.g. Eigenschaften des Fahrzeugreifens erfolgen, da die geringfügige Veränderung in der Unterteil-Dicke lediglich aufgrund von nicht steuerbaren Prozessen während des Vulkanisierens auftritt. Beispiel für entsprechenden Stand der Technik sind beispielsweise in der DE 102017209911 A1, der DE 102004036517 A1 und der JP H11 60810 A offenbart.

Vor diesem Hintergrund liegt der folgenden Erfindung die Aufgabe zugrunde, die Stabilität, Lebensdauer und Laufeigenschaften eines Fahrzeugreifens gezielt weiter zu verbessern.

Die oben genannte Aufgabe wird durch einen unvulkanisierten Reifenrohling, einen Fahrzeugreifen sowie ein Verfahren zur Herstellung eines Fahrzeugreifens nach den unabhängigen Ansprüchen gelöst. Die Unteransprüche geben bevorzugte Weiterbildungen an.

Erfindungsgemäß ist demnach ein Reifenrohling zum Vulkanisieren in einer Vulkanisationspresse mit einem Laufstreifen, einem Reifengürtel, einer Karkasse, Seitenwänden und einem Reifenwulst mit einem Reifenkern sowie einem Kernreiter vorgesehen, wobei der Laufstreifen ein Laufstreifenoberteil und ein in radialer Richtung flächig darunterliegendes Laufstreifenunterteil aufweist, wobei das Laufstreifenunterteil eine radiale Unterteil-Dicke aufweist und das Laufstreifenoberteil eine radiale Oberteil-Dicke aufweist, wobei das Laufstreifenoberteil mindestens eine Profil-Rille und mindestens zwei Profil-Blöcke aufweist, wobei die Profil-Rille die Profil-Blöcke voneinander trennt, wobei die radiale Unterteil-Dicke des Laufstreifenunterteils im unvulkanisierten Zustand des Reifenrohlings (unvulkanisierter Reifenrohling) in axialer Richtung und/oder in Umfangsrichtung variiert, wobei das Laufstreifenunterteil im unvulkanisierten Zustand des Reifenrohlings im Bereich unterhalb eines Profil-Blockes bzw. der mindestens zwei Profil-Blöcke zumindest bereichsweise eine größere radiale Unterteil-Dicke aufweist als im Bereich unterhalb einer Profil-Rille bzw. der mindestens einen die Profil-Blöcke trennenden Profil-Rille. Vorzugsweise ist die Unterteil-Dicke des Laufstreifenunterteils im unvulkanisierten Reifenrohling über die gesamte Ausdehnung des Laufstreifens in dieser Weise ausgebildet, d.h. die Unterteil-Dicke steigt ausgehend von einem Bereich unterhalb einer Profil-Rille hin zu einem Bereich unterhalb eines Profil-Blockes im unvulkanisierten Reifenrohling zunächst an, und fällt anschließend zur nächsten, benachbarten Profil-Rille hin wieder ab, so dass sich insbesondere im Querschnitt (axiale Richtung) des unvulkanisierten Reifenrohlings eine deutlich ausgeprägte Kontur bzw. ein deutlich ausgeprägter Verlauf der Unterteil-Dicke ausbildet.

Die auf oder in dem Laufstreifenoberteil angeordnete mindestens eine Profil-Rille und die Profil-Blöcke bilden dabei die Profilierung des Reifenrohlings bzw. des Fahrzeugreifens, welche in bekannter Weise und entsprechend den individuellen Anforderungen den Kontakt zwischen dem fertiggestellten Fahrzeugreifen und der Fahrbahnoberfläche bildet. Die Profilierung kann hierbei insbesondere auch aus mehreren Profil-Rillen und Profil-Blöcken bestehen, wobei die Position der Profil-Blöcke und Profil-Rillen in Umfangsrichtung je nach Anwendung sowohl konstant als auch variabel bzw. versetzt sein kann.

Aufgrund der auf oder in dem Laufstreifenoberteil angeordneten mindestens eine Profil-Rille und der Profil-Blöcke, ist die Oberteil-Dicke - welche auch als Überdeckungsdicke des Laufstreifenunterteils durch das Laufstreifenoberteil bezeichnet werden kann - nicht über den gesamten Querschnitt des Laufstreifens im unvulkanisierten Reifenrohling konstant, sondern variiert je nach Profilierung in axialer und/oder in Umfangsrichtung. So ergibt sich im Bereich einer Profil-Rille nur eine geringe Oberteil-Dicke, während im Bereich eines Profil-Blocks eine größere Oberteil-Dicke vorliegt. In Bereichen mit geringer Oberteil-Dicke (Profil-Rille) ist das Laufstreifenunterteil im fertiggestellten Fahrzeugreifen also weniger geschützt, als in Bereichen mit größerer Oberteil-Dicke (Profil-Block).

Ein Vorteil ist darin zu sehen, dass durch eine Unterteilung des Laufstreifens in Laufstreifenoberteil und Laufstreifenunterteil der Rollwiderstand des fertiggestellten Fahrzeugreifens verringert wird, wobei dieser Effekt durch die erfindungsgemäße gezielte Anpassung der Unterteil-Dicke bereits im unvulkanisierten Reifenrohling zusätzlich verstärkt werden kann. Dazu ist vorzugsweise vorgesehen, dass das Material des Laufstreifenunterteils derartig gewählt ist, dass ein Energieverlust in dem Laufstreifenunterteil bei einer Deformation des Laufstreifens geringer ist als in dem Laufstreifenoberteil.

Beim Abrollprozess des fertiggestellten Fahrzeugreifens auf der Fahrbahn wird der Reifen im Bereich der Auflagefläche an die Fahrbahn (Latsch) lokal deformiert. Der bei dieser Deformation auftretende materialabhängige Energieverlust (Hystereseverlust) wird in Form von Wärme abgegeben, wobei sich der Rollwiderstand des Fahrzeugreifens in Abhängigkeit von diesem Energieverlust verändert. Aufgrund des Laufstreifenunterteils, dessen Material zu einem geringen Energieverlust bei einer Deformation des Laufstreifens führt, als dies beim Laufstreifenoberteil der Fall ist, wird der Rollwiderstand des Fahrzeugreifens insgesamt gegenüber einem Laufstreifen ohne einem solchen Laufstreifenunterteil reduziert. Dies ermöglich bereits einen effizienteren Betrieb des Fahrzeuges mit einem solchen Fahrzeugreifen.

Durch die erfindungsgemäße Anpassung der Unterteil-Dicke des Laufstreifenunterteils bereits im Reifenrohling wird dieser Effekt kontrolliert verstärkt, da sich der Anteil an Material mit geringem Energieverlust (Laufstreifenunterteil) im Laufstreifen aufgrund der Erhöhung des Laufstreifenunterteils im Reifenrohling unter einem Profil-Block erhöht und der Anteil an Material mit höherem Energieverlust (Laufstreifenoberteil) im Gegenzug verringert. Dieser Effekt verstärkt sich durch Fließprozesse während der nachfolgenden Vulkanisierung des Reifenrohlings, so dass sich im fertiggestellten Fahrzeugreifen nach dem Vulkanisieren eine ausgeprägte, veränderliche Kontur bzw. ein ausgeprägter Höhenverlauf der Unterteil-Dicke insbesondere in axialer Richtung ausbildet.

Der Rollwiderstand kann also durch die erfindungsgemäße Lösung weiter verringert werden, wobei gleichzeitig noch eine ausreichende Abriebfestigkeit und Fahrstabilität im normalen Betrieb des fertiggestellten Fahrzeugreifens gewährleistet werden kann, da diese Anpassung keinen oder nur einen sehr geringen Einfluss auf den Übergang zwischen dem Laufstreifen im fertiggestellten Fahrzeugreifen und der Straße bzw. dem Untergrund hat.

Gleichzeitig kann durch die geringere Unterteil-Dicke im Bereich unterhalb einer Profil-Rille gewährleistet werden, dass das Laufstreifenunterteil auch im fertiggestellten Fahrzeugreifen weiterhin durch das Laufstreifenoberteil geschützt wird. Eine Unterteil-Dicke, die über die gesamte axiale Breite des Reifens erhöht ist, hätte sonst eine Reduzierung der Langzeitbeständigkeit des Laufstreifens zur Folge, da es zu Beschädigungen des Laufstreifenunterteils im Bereich einer Rille kommen könnte. Dies hat auch nur geringe Auswirkungen auf den Rollwiderstand, da die Fläche, die über den gesamten Umfang des Fahrzeugreifens durch die Profil-Rillen eingenommen wird, geringer ist als die Fläche, die durch die Profil-Blöcke eingenommen wird. Insofern hat die Erhöhung der Unterteil-Dicke lediglich im Bereich der Profil-Blöcke bereits einen deutlichen Einfluss auf den Rollwiderstand.

Im Folgenden werden verschiedene Ausführungsformen des Reifenrohlings beschrieben, wobei die einzelnen Ausführungsformen untereinander kombinierbar sind.

Bei einer Ausführungsform ist der Reifenrohling dadurch gekennzeichnet, dass das Laufstreifenoberteil mehrere Profil-Blöcke aufweist, die durch mindestens eine Profil-Rille voneinander getrennt sind, wobei die mindestens eine Profil-Rille in Umfangsrichtung um den Reifenrohling und/oder angewinkelt zur Umfangsrichtung verläuft, so dass die Profil-Blöcke in axialer Richtung und/oder in Umfangsrichtung aneinandergrenzen.

Durch eine entsprechende Anordnung der Profil-Blöcke und Profil-Rillen lässt sich eine Vielzahl von Reifenprofilen realisieren. Hierbei sind insbesondere Reifenprofile mit sowohl in Umfangsrichtung des Laufstreifens als auch quer und schräg dazu verlaufenden Profil-Blöcken und Profil-Rillen umfasst. Beispiele hierfür sind Fahrzeugreifen mit asymmetrischen oder laufrichtungsgebundenen (V-Profil) Reifenprofilen. So kann die erfindungsgemäße Verbesserung also bei einer Vielzahl an unterschiedlichen Fahrzeugreifen bzw. Profilierungen zum Einsatz kommen.

Bei einer weiteren Ausführungsform ist der Reifenrohling dadurch gekennzeichnet, dass die radiale Oberteil-Dicke des Laufstreifenoberteils über den gesamten Querschnitt des unvulkanisierten Reifenrohlings mindestens 2.5mm beträgt, insbesondere im Bereich der Profil-Rille.

Dadurch kann bei entsprechender Wahl der Unterteil-Dicke erreicht werden, dass die Summe aus Oberteil-Dicke und Unterteil-Dicke im Neuzustand des fertiggestellten Fahrzeugreifens an keiner Stelle des Laufstreifens kleiner als 1 mm, vorzugsweise nicht kleiner als 1.5mm, ist und gleichzeitig über den gesamten Laufstreifen ein ausreichender Schutz des Laufstreifenunterteils durch das Laufstreifenoberteil gewährleistet ist.

Bei einer weiteren Ausführungsform ist der Reifenrohling dadurch gekennzeichnet, dass sich die radiale Unterteil-Dicke des Laufstreifenunterteils im unvulkanisierten Reifenrohling zwischen einem Bereich unterhalb eines Profil-Blocks und einem Bereich unterhalb einer Profil-Rille kontinuierlich verändert bzw. einen kontinuierlichen Verlauf aufweist, insbesondere linear oder an die Form der Profil-Rille und/oder des Profil-Blocks angepasst, vorzugsweise mit einem Winkel von zwischen 10° und 40° in Bezug zu der axialen Richtung und/oder zu der Umfangsrichtung.

Zwischen einem Bereich unterhalb eines Profil-Blocks und einem Bereich unterhalb einer Profil-Rille ändert sich erfindungsgemäß die radiale Unterteil-Dicke des Laufstreifenunterteils im unvulkanisierten Reifenrohling, insbesondere in axialer Richtung und ggf. auch in Umfangsrichtung. Durch einen kontinuierlichen Verlauf dieser Änderung der radialen Unterteil-Dicke wird die Produktion des Reifenrohlings bzw. die Herstellung des Laufstreifens, z.B. in Form eines Halbzeugs, vereinfacht. Insbesondere lässt sich durch einen kontinuierlichen Verlauf der "Unterteil-Dicken-Änderung" das Auftreten von Lunkern und anderen Defekten beim Reifenaufbau an den Grenzflächen zwischen Laufstreifenunterteil und Laufstreifenoberteil vermeiden, da entgegen einer abrupten, stufenweisen Änderung keine auszufüllenden Ecken entstehen. Hierdurch werden weiterhin die Stabilität und Lebensdauer des fertiggestellten Fahrzeugreifens verbessert.

Bei einer weiteren Ausführungsform ist der Reifenrohling dadurch gekennzeichnet, dass ein Quotient zwischen der radialen Unterteil-Dicke des Laufstreifenunterteils im unvulkanisierten Reifenrohling und der radialen Oberteil-Dicke des Laufstreifenoberteils im unvulkanisierten Reifenrohling, insbesondere im Bereich eines Profil-Blocks, zwischen 1:4 (25 %) und 1:2 (50 %) liegt.

Hierdurch wird eine ausreichend große Oberteil-Dicke oder Überdeckungsdicke ermöglicht, so dass das Laufstreifenunterteil im fertiggestellten Fahrzeugreifen ausreichend geschützt ist und gleichzeitig der Rollwiderstand durch eine erhöhte Unterteil-Dicke und die Abriebfestigkeit und Fahrstabilität durch eine entsprechend hohe Oberteil-Dicke optimiert wird. Des Weiteren wurde erkannt, dass ein entsprechendes Verhältnis einen besonders guten Kompromiss zwischen Schutz des Laufstreifenunterteils, Abriebfestigkeit, Fahrstabilität und Reduktion des Rollwiderstands des fertiggestellten Fahrzeugreifens darstellt.

Bei einer weiteren Ausführungsform ist der Reifenrohling dadurch gekennzeichnet, dass ein Quotient zwischen der radialen Unterteil-Dicke des Laufstreifenunterteils im unvulkanisierten Reifenrohling in einem Bereich unterhalb einer Profil-Rille und der radialen Unterteil-Dicke des Laufstreifenunterteils im unvulkanisierten Reifenrohling in einem Bereich unterhalb eines Profil-Blocks zwischen 1:1,4 (70 %) und 1:2,5 (40 %) liegt.

Es wurde erkannt, dass ein entsprechendes Verhältnis bzw. ein entsprechender Quotient eine ausreichende Reduktion des Rollwiderstands bewirkt und gleichzeitig ein ausreichender Schutz des Laufstreifenunterteils unterhalb einer Profil-Rille geboten wird.

Bei einer weiteren Ausführungsform ist der Reifenrohling dadurch gekennzeichnet, dass die radiale Unterteil-Dicke des Laufstreifenunterteils im unvulkanisierten Reifenrohling im Bereich unterhalb einer Profil-Rille zwischen 1 mm und 1,5mm beträgt und/oder dass die radiale Unterteil-Dicke des Laufstreifenunterteils im unvulkanisierten Reifenrohling im Bereich unterhalb eines Profil-Blocks zwischen 1,5mm und 3mm beträgt.

Eine derartige Wahl von radialen Unterteil-Dicken im unvulkanisierten Reifenrohling in Bereichen unterhalb einer Profil-Rille und unterhalb eines Profil-Blocks ermöglicht eine Reduzierung des Rollwiderstands der Fahrzeugreifens, wobei gleichzeitig die Oberteil-Dicke des Laufstreifenoberteils im Bereich unterhalb einer Profil-Rille ausreichenden Schutz für das Laufstreifenunterteil bietet.

Bei einer weiteren Ausführungsform ist der Reifenrohling dadurch gekennzeichnet, dass die radiale Unterteil-Dicke des Laufstreifenunterteils des unvulkanisierten Reifenrohlings im Bereich der Seitenwände des Reifenrohlings geringer ist als im Bereich unterhalb eines Profil-Blocks, insbesondere der radialen Unterteil-Dicke des Laufstreifenunterteils im Bereich unterhalb einer Profil-Rille entspricht.

Die geringere radiale Unterteil-Dicke im Bereich der Seitenwände des Reifenrohlings ermöglicht es, in diesem Bereich eine größere radiale Oberteil-Dicke vorzusehen. Da auch die Seitenwände des fertiggestellten Fahrzeugreifens mitunter starken mechanischen Belastungen, wie Abrieb und Verschleiß unterworfen sind, wird in diesem Bereich durch eine größere radiale Oberteil-Dicke das Laufstreifenunterteil besser geschützt, wodurch die Stabilität und Lebensdauer des fertiggestellten Fahrzeugreifens bei guten Laufeigenschaften gewährleistet wird.

Erfindungsgemäß ist weiterhin ein Verfahren zum Herstellen eines Fahrzeugreifens vorgesehen, mit mindestens den folgenden Schritten:
- Bereitstellen eines unvulkanisierten Reifenrohlings, insbesondere eines erfindungsgemäßen unvulkanisierten Reifenrohlings, wobei der Reifenrohling eine Innenschicht, eine Karkasse, einen Reifengürtel, eine Reifenwulst, Seitenwände und einen Laufstreifen aufweist,
   wobei der Laufstreifen ein Laufstreifenunterteil mit einer radialen Unterteil-Dicke und ein Laufstreifenoberteil mit einer radialen Oberteil-Dicke und mit mindestens einer Profil-Rille und mindestens zwei Profil-Blöcken aufweist, wobei das Laufstreifenunterteil vorab mit einer in axialer Richtung und/oder in Umfangsrichtung variierenden Unterteil-Dicke derartig hergestellt wird, dass das Laufstreifenunterteil im unvulkanisierten Reifenrohling im Bereich unterhalb eines Profil-Blockes im Laufstreifenoberteil zumindest bereichsweise eine größere radiale Unterteil-Dicke aufweist als im Bereich unterhalb einer Profil-Rille im Laufstreifenoberteil;
- Vulkanisieren des bereitgestellten Reifenrohlings in einer Vulkanisationspresse; und
- Fertigstellen des Fahrzeugreifens in weiteren Schritten.

Weitere Merkmale und Vorteile des Reifenrohlings sowie des fertiggestellten Fahrzeugreifens ergeben sich aus der nachfolgenden Beschreibung von Ausführungsbeispielen, wobei auf die beigefügte Zeichnung Bezug genommen wird.

In der Zeichnung zeigen
Fig. 1 einen schematischen Querschnitt eines erfindungsgemäßen Fahrzeugreifens;
Fig. 2a einen Ausschnitt aus einem Reifenrohling gemäß dem Stand der Technik;
Fig. 2b einen Ausschnitt aus einem unvulkanisierten Reifenrohling gemäß der Erfindung, und
Fig. 3 einen vulkanisierten Fahrzeugreifen, hergestellt aus einem Reifenrohling gemäß Fig. 2b.

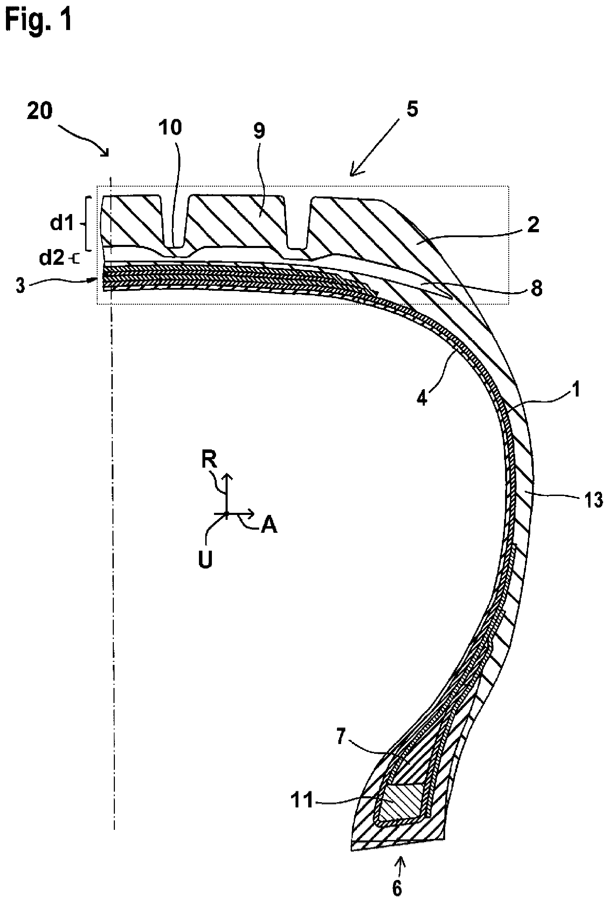

Figur 1 zeigt den schematischen Querschnitt eines erfindungsgemäßen vulkanisierten Fahrzeugreifens 20, bestehend aus einer Innenschicht 4 (Innerliner) und einer sich daran anschließenden Karkasse 1. In radialer Richtung R darüberliegend schließt sich ein aus mehreren Lagen mit Festigkeitsträgern (z.B. Chorde) bestehender Reifengürtel 3 an. Darüber ist wiederum ein Laufstreifen 5 angeordnet. Im Bereich eines Reifenwulsts 6 sind weiterhin ein Reifenkern 11 und ein Kernreiter 7 vorgesehen.

Der Laufstreifen 5 besteht aus einem Laufstreifenunterteil 8, auch "base" genannt, und einem sich daran anschließenden, darüberliegenden Laufstreifenoberteil 2, auch "cap" genannt. Das Laufstreifenoberteil 2 bildet dabei die Schicht, welche im Fahrbetrieb mit der Fahrbahn in Kontakt steht, während das Laufstreifenunterteil 8 den Übergang zu den darunterliegenden Schichten bildet. Durch Fließprozesse während des Vulkanisierens des Fahrzeugreifens 20 können die Übergänge zwischen dem Laufstreifenoberteil 2 und dem Laufstreifenunterteil 8 tatsächlich ungleichmäßiger verlaufen als dargestellt. Weiter weist der Laufstreifen 5 mehrere Profil-Rillen 10, welche in das Laufstreifenoberteil 2 eingebracht sind, und mehrere Profil-Blöcke 9, welche durch die Profil-Rillen 10 voneinander getrennt werden, auf. Die Profil-Rillen 10 können dabei nicht nur in eine Umfangsrichtung U in das Laufstreifenoberteil 2 eingebracht sein, sondern auch in einem Winkel zur Umfangsrichtung U (nicht dargestellt), so dass die Profil-Blöcke 9 auch in Umfangsrichtung U durch Profil-Rillen 10 voneinander getrennt werden können, wie bei Fahrzeugreifen 20 üblich.

Das Laufstreifenoberteil 2 und das Laufstreifenunterteil 8 bestehen aus unterschiedlichen Materialien, vorzugsweise unterschiedlichen viskoelastischen Gummimischungen, die für gewisse Eigenschaften des Fahrzeugreifens 20 sorgen. Die Materialeigenschaften des Laufstreifenoberteils 2 sind beispielsweise derart gewählt, dass eine gute Traktion auch auf nassen Oberflächen bei stabilen mechanischen Eigenschaften, wie Abrieb und Beständigkeit, gewährleistet ist. Die Materialeigenschaften des Laufstreifenunterteils 8 hingegen sind beispielsweise derart gewählt, dass eine gute Wärmeableitung und/oder eine optimale Stoßübertragung auf darunterliegende Schichten innerhalb des Fahrzeugreifens 20, insbesondere auf die Karkasse 1, ermöglicht wird. Weiterhin wird durch eine geeignete Materialauswahl des Laufstreifenunterteils 8 ein Rollwiderstand des Fahrzeugreifens 20 dadurch verringert, dass ein Material gewählt wird, das bei einer Deformation des Laufstreifens 5 zu geringen Energieverlusten bzw. Hystereseverlusten führt.

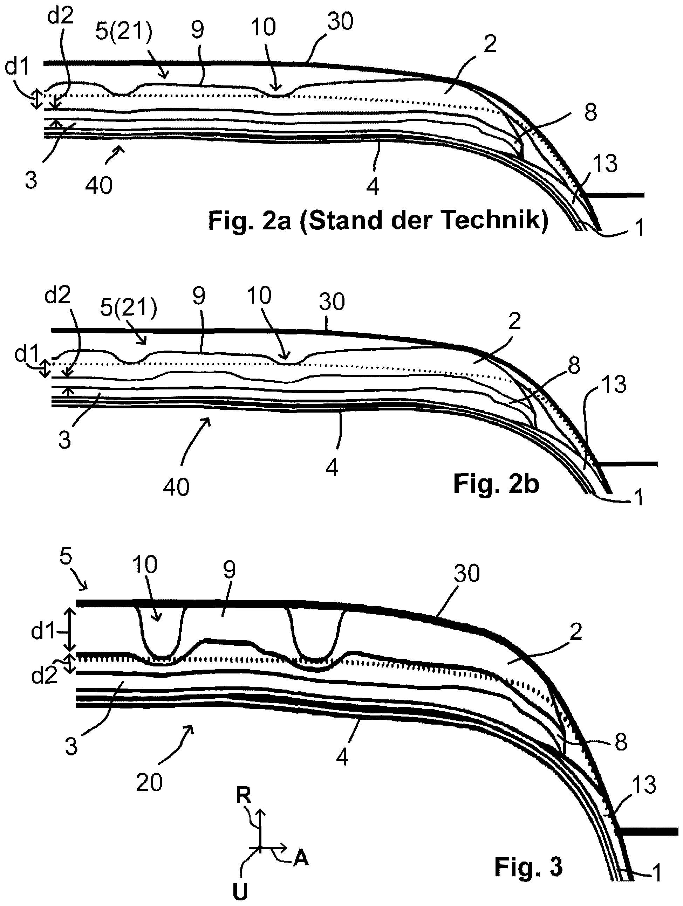

Die genannten Eigenschaften, Abriebfestigkeit, Fahrstabilität, Wärmeableitung, Stoßübertragung, Rollwiderstand, etc., werden also insbesondere durch die Materialauswahl in dem Laufstreifenoberteil 2 und dem Laufstreifenunterteil 8 beeinflusst, wobei sich eine Wechselbeziehung zwischen den einzelnen Eigenschaften ergibt. Um im Rahmen dessen den Rollwiderstand des Fahrzeugreifens 20 zu optimieren, ist gemäß der Erfindung vorgesehen, dass eine radiale Unterteil-Dicke d2 (Dicke des Laufstreifenunterteils 8 in radialer Richtung R) des Laufstreifenunterteils 8 im Bereich unterhalb eines Profil-Blockes 9 in kontrollierter und reproduzierbarer Weise größer eingestellt wird, als im Bereich unterhalb einer Profil-Rille 10, wie auch detailliert in Fig. 3 dargestellt.

Dies erfolgt vorliegend gemäß Fig. 2b und Fig. 3 dadurch, dass bei der Herstellung des Fahrzeugreifens 20 ein Laufstreifen 5 mit einem Laufstreifenunterteil 8 und einem Laufstreifenoberteil 2 bereitgestellt wird, beispielweise als Halbzeug 21, und dieser oberhalb des Reifengürtels 3 angeordnet wird, um einen Reifenrohling 40 zum Einsetzen in eine Vulkanisationspresse 30 auszubilden. Dabei ist die Unterteil-Dicke d2 des Laufstreifenunterteils 8 dieses bereitgestellten Laufstreifens 5 bereits im unbehandelten bzw. unvulkanisierten Zustand des Reifenrohlings 40 im Bereich eines Profil-Blockes 9 größer als im Bereich einer Profil-Rille 10. Die Unterteil-Dicke d2 wird also insbesondere in axialer Richtung A gezielt in Abhängigkeit davon variiert, ob in radialer Richtung R darüberliegend ein Profil-Block 9 oder eine Profil-Rille 10 angeordnet ist.

Dadurch ergibt sich nach der Vulkanisierung des Reifenrohlings 40 in der Vulkanisationspresse 30 wie in Fig. 3 zu sehen eine deutlich ausgeprägte Erhöhung der Unterteil-Dicke d2 des Laufstreifenunterteils 8 in axialer Richtung A unter einem Profil-Block 9. Sind auch die Positionen von Profil-Rillen 10 bekannt, die gegenüber der Umfangsrichtung U angewinkelt sind (nicht dargestellt), so kann die Unterteil-Dicke d2 im Halbzeug 21 bzw. im unvulkanisierten Laufstreifen 5 grundsätzlich auch in Umfangsrichtung U in derselben Weise variieren, um eine ausgeprägte Veränderung der Unterteil-Dicke d2 im vulkanisierten Laufstreifen 5 auch in dieser Richtung zu erhalten.

In Fig. 2a ist im Gegensatz dazu ein Reifenrohling 40 mit einem unvulkanisierten Laufstreifen 5 gemäß dem Stand der Technik dargestellt. Demnach ist die Unterteil-Dicke d2 des Laufstreifenunterteils 8 insbesondere entlang der axialen Richtung A konstant eingestellt. Während der Vulkanisierung des Reifenrohlings 40 in der Vulkanisationspresse 30 können zwar durch Fließprozesse beim Erhitzen der Materialien willkürliche Veränderungen in der Unterteil-Dicke d2 auftreten, diese sind jedoch nur sehr gering ausgeprägt und erlauben keine kontrollierte und reproduzierbare Einstellung der Eigenschaften des Laufstreifens 5 bzw. des Fahrzeugreifens 20.

Wie in Fig. 3 dargestellt, stellt sich durch die Fließprozesse während des Vulkanisierens im fertiggestellten Fahrzeugreifen 20 ein kontinuierlicher Verlauf der Unterteil-Dicke d2 in den Übergangsbereichen zwischen einem Bereich unterhalb der Profil-Rille 10 und unterhalb eines Profil-Blocks 9 ein. Daher ist das Laufstreifenunterteil 8 unter Umständen nicht im gesamten Bereich unterhalb eines Profil-Blockes 9 gleich dick, vorzugsweise jedoch im überwiegenden Teil, um eine kontrollierbare Einstellung der Eigenschaften des Fahrzeugreifens 20 durch eine ausgeprägte Erhöhung unter einem Profil-Block 9 zu erreichen.

Dabei ist vorzugsweise vorgesehen, dass die Unterteil-Dicke d2 im unvulkanisierten Laufstreifen 5 unterhalb einer Profil-Rille 10 gegenüber dem Stand der Technik unverändert bleibt, so dass eine radiale Oberteil-Dicke d1 (Dicke des Laufstreifenoberteils 2 in radialer Richtung R; in axialer Richtung A und ggf. in Umfangsrichtung U ebenfalls variierend) im Bereich unterhalb einer Profil-Rille 10 noch ausreichend dick ist, um das Laufstreifenunterteil 8 vor äußeren mechanischen Einflüssen zu schützen. Gegenüber dem Stand der Technik wird also die radiale Unterteil-Dicke d2 im unvulkanisierten Laufstreifen 5 vorzugsweise lediglich im Bereich eines Profil-Blockes 9 verändert, insbesondere erhöht, und dabei im unvulkanisierten Laufstreifen 5 kontinuierliche Übergänge zwischen Bereichen unterhalb eines Profil-Blocks 9 und unterhalb einer Profil-Rille 10 geschaffen.

Dadurch wird der Anteil, den das Laufstreifenunterteil 8 im unvulkanisierten Laufstreifen 5 (z. B. als Halbzeug 21) des Reifenrohlings 40 aber auch im vulkanisierten Laufstreifen 5 des fertiggestellten Fahrzeugreifens 20 einnimmt, erhöht und gleichzeitig der Anteil des Laufstreifenoberteils 2 verringert. Dadurch erhöht sich auch der Anteil des Materials im Laufstreifen 5, der im fertigen Fahrzeugreifen 20 für einen geringen Rollwiderstand sorgt, da das Laufstreifenunterteil 8 materialseitig auf diese Eigenschaft optimiert ist, indem ein Material verwendet wird, das zu einem geringen Energieverlust beim Deformieren (Hystereseverlust) des Fahrzeugreifens 20 im Bereich des Laufstreifens 5 führt. Da das Laufstreifenoberteil 2 im Bereich eines Profil-Blocks 9 auch weiterhin eine ausreichend hohe Oberteil-Dicke d1 aufweist, ist durch entsprechende Materialauswahl auch weiterhin eine hohe Abriebfestigkeit und Fahrstabilität gewährleistet. Insgesamt verringert sich also durch die erfindungsgemäße Anpassung der Unterteil-Dicke d2 des Laufstreifenunterteils 8 im unvulkanisierten Laufstreifen 5 (als Halbzeug 21) des Reifenrohlings 40 der Rollwiderstand des vulkanisierten, fertiggestellten Fahrzeugreifens 20, ohne dabei die anderen Eigenschaften negativ zu beeinträchtigen.

Im Bereich einer Seitenfläche 13 ist die radiale Unterteil-Dicke d2 des vulkanisierten Laufstreifens 5 und damit auch des vulkanisierten Fahrzeugreifens 20 wieder geringer als im Bereich unterhalb eines Profil-Blocks 9, was einen ausreichenden Schutz des Laufstreifenunterteils 8 an den Seitenflächen 13 gewährleistet.

Zur Herstellung des Fahrzeugreifens 20 ist demnach vorgesehen, einen Reifenrohling 40 aufzubauen bzw. bereitzustellen, der aus der Innenschicht 4, der Karkasse 1, dem Reifengürtel 3, der Reifenwulst 6, Seitenwänden 13 und dem vorab mit axial variierender Unterteil-Dicke d2 wie beschrieben hergestellten (unvulkanisierten) Laufstreifen 5, der beispielsweise als Halbzeug 21 bereitgestellt wird, besteht. Dieser bereitgestellte Reifenrohling 40 wird anschließend in der Vulkanisationspresse 30 vulkanisiert und der Fahrzeugreifen 20 anschließend mit weiteren Schritten fertiggestellt, wobei die Eigenschaften des Fahrzeugreifens 20, wie eine Abriebfestigkeit, eine Fahrstabilität, eine Wärmeableitung, eine Stoßübertragung, ein Rollwiderstand, etc. aufgrund der kontrolliert eingestellten Unterteil-Dicke d2 gezielt und reproduzierbar verändert bzw. eingestellt werden können.

### Bezugszeichenliste

- 1: Karkasse
- 2: Laufstreifenoberteil
- 3: Reifengürtel
- 4: Innenschicht
- 5: Laufstreifen
- 6: Reifenwulst
- 7: Kernreiter
- 8: Laufstreifenunterteil
- 9: Profil-Block
- 10: Profil-Rille
- 11: Reifenkern
- 13: Seitenwand
- 20: Fahrzeugreifen
- 21: Halbzeug (unvulkanisierter Laufstreifen 5)
- 30: Vulkanisationspresse
- 40: Reifenrohling
- A: axiale Richtung
- d1: Oberteil-Dicke
- d2: Unterteil-Dicke
- R: radiale Richtung
- U: Umfangsrichtung

## Patentansprüche

1. Unvulkanisierter Reifenrohling (40) zum Vulkanisieren in einer Vulkanisationspresse (30), mit einem Laufstreifen (5), einem Reifengürtel (3), einer Karkasse (1), Seitenwänden (13) und einem Reifenwulst (6), der einen Reifenkern (11) sowie einen Kernreiter (7) aufweist,
wobei der Laufstreifen (5) ein Laufstreifenoberteil (2) und ein in radialer Richtung (R) flächig darunterliegendes Laufstreifenunterteil (8) aufweist, wobei das Laufstreifenunterteil (8) eine radiale Unterteil-Dicke (d2) aufweist, wobei das Laufstreifenoberteil (2) eine radiale Oberteil-Dicke (d1) aufweist, wobei das Laufstreifenoberteil (2) mindestens eine Profil-Rille (10) und mindestens zwei Profil-Blöcke (9) aufweist, wobei die Profil-Rille (10) die Profil-Blöcke (9) voneinander trennt,
**dadurch gekennzeichnet, dass**
die radiale Unterteil-Dicke (d2) des Laufstreifenunterteils (8) im unvulkanisierten Reifenrohling (40) in axialer Richtung (A) und/oder in Umfangsrichtung (U) variiert, wobei das Laufstreifenunterteil (8) im unvulkanisierten Reifenrohling (40) im Bereich unterhalb eines Profil-Blockes (9) zumindest bereichsweise eine größere radiale Unterteil-Dicke (d2) aufweist als im Bereich unterhalb einer Profil-Rille (10).

2. Unvulkanisierter Reifenrohling (40) nach Anspruch 1,
**dadurch gekennzeichnet, dass**
das Laufstreifenoberteil (8) mehrere Profil-Blöcke (9) aufweist, die durch mindestens eine Profil-Rille (10) voneinander getrennt sind, wobei die mindestens eine Profil-Rille (10) in Umfangsrichtung (U) um den Reifenrohling (40) und/oder angewinkelt zur Umfangsrichtung (U) verläuft, so dass die Profil-Blöcke (9) in axialer Richtung (A) und/oder in Umfangsrichtung (U) aneinandergrenzen.

3. Unvulkanisierter Reifenrohling (40) nach Anspruch 1 oder 2,
**dadurch gekennzeichnet, dass**
die radiale Oberteil-Dicke (d1) des Laufstreifenoberteils (2) über den gesamten Querschnitt des unvulkanisierten Reifenrohlings (40) mindestens 2.0mm beträgt, insbesondere im Bereich der Profil-Rille (10).

4. Unvulkanisierter Reifenrohling (40) nach einem der Ansprüche 1 bis 3,
**dadurch gekennzeichnet, dass**
sich die radiale Unterteil-Dicke (d2) des Laufstreifenunterteils (8) im unvulkanisierten Reifenrohling (40) zwischen einem Bereich unterhalb eines Profil-Blocks (9) und einem Bereich unterhalb einer Profil-Rille (10) kontinuierlich verändert, insbesondere linear oder an die Form der Profil-Rille (10) und/oder des Profil-Blocks (9) angepasst, vorzugsweise mit einem Winkel von zwischen 10° und 40° in Bezug zu der axialen Richtung (A) und/oder zu der Umfangsrichtung (U).

5. Unvulkanisierter Reifenrohling (40) nach einem der Ansprüche 1 bis 4,
**dadurch gekennzeichnet, dass**
ein Quotient zwischen der radialen Unterteil-Dicke (d2) des Laufstreifenunterteils (8) im unvulkanisierten Reifenrohling (40) und der radialen Oberteil-Dicke (d1) des Laufstreifenoberteils (2) im unvulkanisierten Reifenrohling (40), insbesondere im Bereich eines Profil-Blocks (9), zwischen 1:4 und 1:2 liegt.

6. Unvulkanisierter Reifenrohling (40) nach einem der Ansprüche 1 bis 5,
**dadurch gekennzeichnet, dass**
ein Quotient zwischen der radialen Unterteil-Dicke (d2) des Laufstreifenunterteils (8) im unvulkanisierten Reifenrohling (40) in einem Bereich unterhalb einer Profil-Rille (10) und der radialen Unterteil-Dicke (d2) des Laufstreifenunterteils (8) im unvulkanisierten Reifenrohling (40) in einem Bereich unterhalb eines Profil-Blocks (9) zwischen 1:1,4 und 1:3 liegt.

7. Unvulkanisierter Reifenrohling (40) nach einem der Ansprüche 1 bis 6,
**dadurch gekennzeichnet, dass**
die radiale Unterteil-Dicke (d2) des Laufstreifenunterteils (8) im unvulkanisierten Reifenrohling (40) im Bereich unterhalb einer Profil-Rille (10) zwischen 0,5mm und 1,5mm beträgt und/oder dass die radiale Unterteil-Dicke (d2) des Laufstreifenunterteils (8) im unvulkanisierten Reifenrohling (40) im Bereich unterhalb eines Profil-Blocks (9) zwischen 1,5mm und 3mm beträgt.

8. Unvulkanisierter Reifenrohling (40) nach einem der Ansprüche 1 bis 7,
**dadurch gekennzeichnet, dass**
die radiale Unterteil-Dicke (d2) des Laufstreifenunterteils (8) des unvulkanisierten Reifenrohlings (40) im Bereich der Seitenwände (13) des Reifenrohlings (40) geringer ist als im Bereich unterhalb eines Profil-Blocks (9), insbesondere der radialen Unterteil-Dicke (d2) des Laufstreifenunterteils (8) im Bereich unterhalb einer Profil-Rille (10) entspricht.

9. Unvulkanisierter Reifenrohling (40) nach einem der Anspruch 1 bis 8,
**dadurch gekennzeichnet, dass**
das Material des Laufstreifenunterteils (8) derartig gewählt ist, dass ein Energieverlust in dem Laufstreifenunterteil (8) bei einer Deformation des Laufstreifens (5) geringer ist als in dem Laufstreifenoberteil (2).

10. Fahrzeugreifen (20), hergestellt durch Vulkanisieren eines unvulkanisierten Reifenrohlings (40) nach einem der Ansprüche 1 bis 9.

11. Verfahren zum Herstellen eines Fahrzeugreifens (20), mit mindestens den folgenden Schritten:
- Bereitstellen eines unvulkanisierten Reifenrohlings (40) nach einem der Ansprüche 1 bis 9, wobei der Reifenrohling (40) eine Innenschicht (4), eine Karkasse (1), einen Reifengürtel (3), eine Reifenwulst (6), Seitenwände (13) und einen Laufstreifen (5) aufweist,
wobei der Laufstreifen (5) ein Laufstreifenunterteil (8) mit einer radialen Unterteil-Dicke (d2) und ein Laufstreifenoberteil (2) mit einer radialen Oberteil-Dicke (d1) und mit mindestens einer Profil-Rille (10) und mindestens zwei Profil-Blöcken (9) aufweist,
wobei das Laufstreifenunterteil (8) vorab mit einer in axialer Richtung (R) und/oder in Umfangsrichtung (U) variierenden Unterteil-Dicke (d2) derartig hergestellt wird, dass das Laufstreifenunterteil (8) im unvulkanisierten Reifenrohling (40) im Bereich unterhalb eines Profil-Blockes (9) zumindest bereichsweise eine größere radiale Unterteil-Dicke (d2) aufweist als im Bereich unterhalb einer Profil-Rille (10);
- Vulkanisieren des bereitgestellten Reifenrohlings (40) in einer Vulkanisationspresse (30); und
- Fertigstellen des Fahrzeugreifens (20) in weiteren Schritten.

## Claims

1. Unvulcanized tyre blank (40) for vulcanization in a vulcanizing press (30), comprising a tread (5), a tyre belt (3), a carcass (1), sidewalls (13) and a tyre bead (6) which comprises a tyre core (11) and a bead filler (7),
wherein the tread (5) has a tread upper part (2) and a tread lower part (8) located areally therebelow in a radial direction (R),
wherein the tread lower part (8) has a radial lower part thickness (d2),
wherein the tread upper part (2) has a radial upper part thickness (d1),
wherein the tread upper part (2) has at least one profile groove (10) and at least two profile blocks (9), wherein the profile groove (10) separates the profile blocks (9) from one another,
**characterized in that**
the radial lower part thickness (d2) of the tread lower part (8) in the unvulcanized tyre blank (40) varies in an axial direction (A) and/or in a circumferential direction (U), wherein the tread lower part (8) in the unvulcanized tyre blank (40) has a greater radial lower part thickness (d2) at least in certain regions in the region below a profile block (9) than in the region below a profile groove (10).

2. Unvulcanized tyre blank (40) according to Claim 1,
**characterized in that**
the tread upper part (8) has multiple profile blocks (9) which are separated from one another by at least one profile groove (10), wherein the at least one profile groove (10) runs around the tyre blank (40) in the circumferential direction (U) and/or angled with respect to the circumferential direction (U), such that the profile blocks (9) adjoin one another in the axial direction (A) and/or in the circumferential direction (U).

3. Unvulcanized tyre blank (40) according to Claim 1 or 2,
**characterized in that**
the radial upper part thickness (d1) of the tread upper part (2) is at least 2.0 mm over the entire cross section of the unvulcanized tyre blank (40), in particular in the region of the profile groove (10).

4. Unvulcanized tyre blank (40) according to one of Claims 1 to 3,
**characterized in that**
the radial lower part thickness (d2) of the tread lower part (8) in the unvulcanized tyre blank (40) changes continuously between a region below a profile block (9) and a region below a profile groove (10), in particular is adapted linearly or to the shape of the profile groove (10) and/or of the profile block (9), preferably at an angle of between 10° and 40° in relation to the axial direction (A) and/or to the circumferential direction (U).

5. Unvulcanized tyre blank (40) according to one of Claims 1 to 4,
**characterized in that**
a quotient between the radial lower part thickness (d2) of the tread lower part (8) in the unvulcanized tyre blank (40) and the radial upper part thickness (d1) of the tread upper part (2) in the unvulcanized tyre blank (40), in particular in the region of a profile block (9), lies between 1:4 and 1:2.

6. Unvulcanized tyre blank (40) according to one of Claims 1 to 5,
**characterized in that**
a quotient between the radial lower part thickness (d2) of the tread lower part (8) in the unvulcanized tyre blank (40) in a region below a profile groove (10) and the radial lower part thickness (d2) of the tread lower part (8) in the unvulcanized tyre blank (40) in a region below a profile block (9) lies between 1:1.4 and 1:3.

7. Unvulcanized tyre blank (40) according to one of Claims 1 to 6,
**characterized in that**
the radial lower part thickness (d2) of the tread lower part (8) in the unvulcanized tyre blank (40) in the region below a profile groove (10) is between 0.5 mm and 1.5 mm, and/or **in that** the radial lower part thickness (d2) of the tread lower part (8) in the unvulcanized tyre blank (40) in the region below a profile block (9) is between 1.5 mm and 3 mm.

8. Unvulcanized tyre blank (40) according to one of Claims 1 to 7,
**characterized in that**
the radial lower part thickness (d2) of the tread lower part (8) of the unvulcanized tyre blank (40) in the region of the sidewalls (13) of the tyre blank (40) is lower than in the region below a profile block (9), in particular corresponds to the radial lower part thickness (d2) of the tread lower part (8) in the region below a profile groove (10).

9. Unvulcanized tyre blank (40) according to one of Claims 1 to 8,
**characterized in that**
the material of the tread lower part (8) is selected such that, in the event of a deformation of the tread (5), an energy loss in the tread lower part (8) is lower than in the tread upper part (2).

10. Vehicle tyre (20) produced by vulcanization of an unvulcanized tyre blank (40) according to one of Claims 1 to 9.

11. Method for producing a vehicle tyre (20), comprising at least the following steps:
- providing an unvulcanized tyre blank (40) according to one of Claims 1 to 9, wherein the tyre blank (40) comprises an inner layer (4), a carcass (1), a tyre belt (3), a tyre bead (6), sidewalls (13) and a tread (5),
wherein the tread (5) has a tread lower part (8) with a radial lower part thickness (d2) and a tread upper part (2) with a radial upper part thickness (d1) and with at least one profile groove (10) and at least two profile blocks (9),
wherein the tread lower part (8) is produced in advance with a lower part thickness (d2), which varies in the axial direction (R) and/or in the circumferential direction (U), in such a way that the tread lower part (8) in the unvulcanized tyre blank (40) has a greater radial lower part thickness (d2) at least in certain regions in the region below a profile block (9) than in the region below a profile groove (10);
- vulcanizing the provided tyre blank (40) in a vulcanizing press (30); and
- finishing the vehicle tyre (20) in further steps.

## Revendications

1. Ébauche de pneu non vulcanisée (40) pour la vulcanisation dans une presse de vulcanisation (30), avec une bande de roulement (5), une ceinture de pneu (3), une carcasse (1), des parois latérales (13) et un talon de pneu (6), qui présente une âme de pneu (11) ainsi qu'un bourrage sur tringle (7),
la bande de roulement (5) présentant une partie supérieure de bande de roulement (2) et une partie inférieure de bande de roulement (8) située à plat en dessous dans la direction radiale (R), la partie inférieure de bande de roulement (8) présentant une épaisseur radiale de partie inférieure (d2), la partie supérieure de bande de roulement (2) présentant une épaisseur radiale de partie supérieure (d1), la partie supérieure de bande de roulement (2) présentant au moins une rainure de profil (10) et au moins deux blocs de profil (9), la rainure de profil (10) séparant les blocs de profil (9) les uns des autres,
**caractérisée en ce que**
l'épaisseur radiale de partie inférieure (d2) de la partie inférieure de bande de roulement (8) dans l'ébauche de pneu non vulcanisée (40) varie dans la direction axiale (A) et/ou dans la direction circonférentielle (U), la partie inférieure de bande de roulement (8) dans l'ébauche de pneu non vulcanisée (40) présentant dans la zone en dessous d'un bloc de profil (9), au moins par zones, une épaisseur radiale de partie inférieure (d2) plus grande que dans la zone en dessous d'une rainure de profil (10).

2. Ébauche de pneu non vulcanisée (40) selon la revendication 1,
**caractérisée** en que
la partie supérieure de bande de roulement (8) présente plusieurs blocs de profil (9) qui sont séparés les uns des autres par au moins une rainure de profil (10), l'au moins une rainure de profil (10) s'étendant dans la direction circonférentielle (U) autour de l'ébauche de pneu (40) et/ou de manière inclinée par rapport à la direction circonférentielle (U), de telle sorte que les blocs de profil (9) sont adjacents les uns aux autres dans la direction axiale (A) et/ou dans la direction circonférentielle (U).

3. Ébauche de pneu non vulcanisée (40) selon la revendication 1 ou 2,
**caractérisée en ce que**
l'épaisseur radiale de partie supérieure (d1) de la partie supérieure de bande de roulement (2) est d'au moins 2,0 mm sur toute la section transversale de l'ébauche de pneu non vulcanisée (40), notamment dans la zone de la rainure de profil (10).

4. Ébauche de pneu non vulcanisée (40) selon l'une quelconque des revendications 1 à 3,
**caractérisée en ce que**
l'épaisseur radiale de partie inférieure (d2) de la partie inférieure de bande de roulement (8) se modifie de manière continue dans l'ébauche de pneu non vulcanisée (40) entre une zone en dessous d'un bloc de profil (9) et une zone en dessous d'une rainure de profil (10), notamment de manière linéaire ou adaptée à la forme de la rainure de profil (10) et/ou du bloc de profil (9), de préférence avec un angle compris entre 10° et 40° par rapport à la direction axiale (A) et/ou à la direction circonférentielle (U).

5. Ébauche de pneu non vulcanisée (40) selon l'une quelconque des revendications 1 à 4,
**caractérisée en ce**
**qu'**un quotient entre l'épaisseur radiale de partie inférieure (d2) de la partie inférieure de bande de roulement (8) dans l'ébauche de pneu non vulcanisée (40) et l'épaisseur radiale de partie supérieure (d1) de la partie supérieure de bande de roulement (2) dans l'ébauche de pneu non vulcanisée (40), notamment dans la zone d'un bloc de profil (9), est compris entre 1:4 et 1:2.

6. Ébauche de pneu non vulcanisée (40) selon l'une quelconque des revendications 1 à 5,
**caractérisée en ce**
**qu'**un quotient entre l'épaisseur radiale de partie inférieure (d2) de la partie inférieure de bande de roulement (8) dans l'ébauche de pneu non vulcanisée (40) dans une zone en dessous d'une rainure de profil (10) et l'épaisseur radiale de partie inférieure (d2) de la partie inférieure de bande de roulement (8) dans l'ébauche de pneu non vulcanisée (40) dans une zone en dessous d'un bloc de profil (9) est compris entre 1:1,4 et 1:3.

7. Ébauche de pneu non vulcanisée (40) selon l'une quelconque des revendications 1 à 6,
**caractérisée en ce que**
l'épaisseur radiale de partie inférieure (d2) de la partie inférieure de bande de roulement (8) dans l'ébauche de pneu non vulcanisée (40) dans la zone en dessous d'une rainure de profil (10) est comprise entre 0,5 mm et 1,5 mm et/ou **en ce que** l'épaisseur radiale de partie inférieure (d2) de la partie inférieure de bande de roulement (8) dans l'ébauche de pneu non vulcanisée (40) dans la zone en dessous d'un bloc de profil (9) est comprise entre 1,5 mm et 3 mm.

8. Ébauche de pneu non vulcanisée (40) selon l'une quelconque des revendications 1 à 7,
**caractérisée en ce que**
l'épaisseur radiale de partie inférieure (d2) de la partie inférieure de bande de roulement (8) de l'ébauche de pneu non vulcanisée (40) est plus faible dans la zone des parois latérales (13) de l'ébauche de pneu (40) que dans la zone en dessous d'un bloc de profil (9), notamment correspond à l'épaisseur radiale de partie inférieure (d2) de la partie inférieure de bande de roulement (8) dans la zone en dessous d'une rainure de profil (10).

9. Ébauche de pneu non vulcanisée (40) selon l'une quelconque des revendications 1 à 8,
**caractérisée en ce que**
le matériau de la partie inférieure de bande de roulement (8) est choisi de telle sorte qu'une perte d'énergie dans la partie inférieure de bande de roulement (8) lors d'une déformation de la bande de roulement (5) est inférieure à celle dans la partie supérieure de bande de roulement (2).

10. Pneu de véhicule (20), fabriqué par vulcanisation d'une ébauche de pneu non vulcanisée (40) selon l'une quelconque des revendications 1 à 9.

11. Procédé de fabrication d'un pneu de véhicule (20), avec au moins les étapes suivantes :
- la fourniture d'une ébauche de pneu non vulcanisée (40) selon l'une quelconque des revendications 1 à 9, l'ébauche de pneu (40) présentant une couche intérieure (4), une carcasse (1), une ceinture de pneu (3), un talon de pneu (6), des parois latérales (13) et une bande de roulement (5),
la bande de roulement (5) présentant une partie inférieure de bande de roulement (8) ayant une épaisseur radiale de partie inférieure (d2) et une partie supérieure de bande de roulement (2) ayant une épaisseur radiale de partie supérieure (d1) et avec au moins une rainure de profil (10) et au moins deux blocs de profil (9),
la partie inférieure de bande de roulement (8) étant fabriquée au préalable avec une épaisseur de partie inférieure (d2) variant dans la direction axiale (R) et/ou dans la direction circonférentielle (U) de telle sorte que la partie inférieure de bande de roulement (8) présente, dans l'ébauche de pneu non vulcanisée (40), dans la zone en dessous d'un bloc de profil (9), au moins par zones, une épaisseur radiale de partie inférieure (d2) plus grande que dans la zone en dessous d'une rainure de profil (10) ;
- la vulcanisation de l'ébauche de pneu (40) fournie dans une presse de vulcanisation (30) ; et
- la finition du pneu de véhicule (20) dans d'autres étapes.
